# EUROPEAN PATENT SPECIFICATION

(11) **EP 4 191 778 B1**
(45) Date of publication and mention of the grant of the patent: **11.02.2026**
(21) Application number: 21854412.0
(22) Date of filing: 06.08.2021
(51) Int. Cl.: H01M 50/449, H01M 50/46, H01M 50/446, H01M 50/403, H01M 10/058, H01M 10/052, H01M 50/491, H01M 50/417, H01M 50/42, H01M 50/451, H01M 50/457

(54) **SEPARATOR FOR SECONDARY BATTERY AND SECONDARY BATTERY INCLUDING THE SAME**
SEPARATOR FÜR SEKUNDÄRBATTERIE UND SEKUNDÄRBATTERIE, DIE DENSELBEN ENTHÄLT
SÉPARATEUR POUR BATTERIE SECONDAIRE ET BATTERIE SECONDAIRE INCLUANT LE MÊME

(30) Priority: 07.08.2020 KR 20200099520
(43) Date of publication of application: 07.06.2023
(73) Proprietor: LG Energy Solution, Ltd., Seoul 07335 (KR)
(72) Inventor: KWON, Hye-Jin, Daejeon 34122 (KR); KA, Kyung-Ryun, Daejeon 34122 (KR); LEE, Seung-Hyun, Daejeon 34122 (KR); LEE, Je-An, Daejeon 34122 (KR)
(74) Representative: Hoffmann Eitle
(86) International application number: PCT/KR2021/010450
(87) International publication number: WO 2022/031131

(56) References cited:
- WO-A1-2019/221401
- KR-A- 20160 020 283
- KR-A- 20170 055 440
- KR-A- 20170 087 315
- KR-A- 20190 056 157
- KR-B1- 100 923 375
- US-A1- 2016 285 063
- US-A1- 2018 212 219

## Description

### TECHNICAL FIELD

The present disclosure relates to a separator for a secondary battery and a secondary battery including the same. Particularly, the present disclosure relates to a separator for a secondary battery which has improved heat resistance and improved adhesion to an electrode, and a secondary battery including the same.

### BACKGROUND ART

Recently, energy storage technology has been given an increasing attention. Efforts into research and development for electrochemical devices have been actualized more and more, as the application of energy storage technology has been extended to energy for cellular phones, camcorders and notebook PC and even to energy for electric vehicles. In this context, electrochemical devices have been most spotlighted. Among such electrochemical devices, development of rechargeable secondary batteries has been focused. More recently, active studies have been conducted about designing a novel electrode and battery in order to improve the capacity density and specific energy in developing such batteries.

Among the commercially available secondary batteries, lithium secondary batteries developed in the early 1990's have been spotlighted, since they have a higher operating voltage and significantly higher energy density as compared to conventional batteries, such as Ni-MH, Ni-Cd and sulfuric acid-lead batteries using an aqueous electrolyte. However, such lithium-ion batteries cause safety-related problems, such as ignition and explosion, due to the use of an organic electrolyte, and have a disadvantage in that they are difficult to manufacture.

More recently, lithium-ion polymer batteries have improved such disadvantages of lithium-ion batteries and have been expected as one of the next-generation batteries. However, such lithium-ion polymer batteries still provide relatively lower capacity as compared to lithium-ion batteries, and particularly show insufficient discharge capacity at low temperature. Therefore, there is an imminent need for improving such a disadvantage.

Although such electrochemical devices have been produced from many production companies, safety characteristics thereof show different signs. Evaluation and securement of safety of such electrochemical devices are very important. The most important consideration is that electrochemical devices should not damage users upon their malfunction. For this purpose, safety standards strictly control ignition and smoke emission in electrochemical devices. With regard to safety characteristics of electrochemical devices, there is great concern about explosion when an electrochemical device is overheated to cause thermal runaway or perforation of a separator. Particularly, a polyolefin-based porous substrate used conventionally as a separator for an electrochemical device shows a severe heat shrinking behavior at a temperature of 100°C or higher due to its material property and a characteristic during its manufacturing process, including orientation, thereby causing a short-circuit between a cathode and an anode.

To solve the above-mentioned safety problems of an electrochemical device, there has been suggested a separator having a porous organic-inorganic coating layer formed by applying a mixture of an excessive amount of inorganic particles with a binder polymer onto at least one surface of a porous polymer substrate having a plurality of pores.

However, when introducing such a porous organic-inorganic coating layer to a separator, the separator shows the problems of increased resistance, reduced adhesion to an electrode, or the like. Therefore, there is a need for a solution to the above-mentioned problems.

WO 2019/221401 A1 describes a separator containing inorganic particles, a binder for binding the inorganic particles, and a cross-linker, but does not contain a polyolefin substrate.

US 2018/212219 A1 relates to a separation membrane and a lithium secondary battery comprising the same, the separation membrane comprising a porous substrate and a porous heat-resistant layer formed on one or both surfaces of the substrate, wherein the porous heat-resistant layer comprises a crosslinked structure binder and an inorganic particle, and the inorganic particle is surface-treated with a functional group and reacted with the crosslinked structure binder.

US 2016/285063 A1 concerns a separator for a rechargeable lithium battery and a rechargeable lithium battery including the same, the separator including a substrate, and a heat-resistant porous layer on at least one side of the substrate, the heat-resistant porous layer including a crosslinked binder and a non-crosslinked binder, wherein the crosslinked binder has a cross-linked structure of at least one crosslinkable compound, the at least one crosslinkable compound including a multi-functional urethane-based compound, and the crosslinked binder and the non-crosslinked binder are included in a weight ratio of about 3:7 to about 8:2.

KR 2017 0055440 A relates to a separator with an electrode adhesive layer and an electrochemical device including the same, wherein the electrode adhesive layer comprises organic particles and an acrylic resin binder.

KR 100 923 375 B1 concerns an adhesive composition-supporting separator for a battery, which comprises a porous substrate supporting thereon a thermally cross-linkable adhesive composition comprising a multi-functional isocyanate and a reactive polymer having a functional group capable of reacting with an isocyanato group of the multi-functional isocyanate.

KR 2017 0087315 A describes a composite membrane comprising a porous coating containing a binder resin cross-liked by heat or active energy rays.

KR 2016 0020283 A describes a separator comprising a porous base material and a first coated layer formed on one side of the porous base material, wherein the first coated layer comprises a (meta)acrylic acid ester polymer particle with a glass transition temperature of 10 to 60 °C.

KR 2019 0056157 A concerns a composite separator, a fabricating method thereof, and a secondary battery including the composite separator.

### DISCLOSURE

### Technical Problem

The present disclosure is designed to solve the problems of the related art, and therefore the present disclosure is directed to providing a separator for a secondary battery which shows improved adhesion to an electrode and has excellent heat resistance.

The present disclosure is also directed to providing a secondary battery including the separator.

### Technical Solution

**In** one aspect of the present disclosure, there is provided a separator for a secondary battery according to any one of the following embodiments.

According to the first embodiment, there is provided a separator for a secondary battery, including:
a porous polymer substrate having a plurality of pores; and
a porous coating layer disposed on at least one surface of the porous polymer substrate and including a plurality of inorganic particles and a urethane bond-containing crosslinked polymer,
   wherein the urethane bond-containing crosslinked polymer is obtained through the urethane crosslinking reaction of at least one crosslinkable polymer containing a urethane reactive functional group,
the urethane bond-containing crosslinked polymer is disposed partially or totally on the surfaces of the inorganic particles so that the inorganic particles may be interconnected and fixed, and the urethane bond-containing crosslinked polymer has a glass transition temperature (T_{g}) of -15 to 32°C.

According to the second embodiment, there is provided the separator for a secondary battery as defined in the first embodiment, wherein the urethane bond-containing crosslinked polymer has a glass transition temperature (T_{g}) of -10 to 30°C.

According to the third embodiment, there is provided the separator for a secondary battery as defined in the first or the second embodiment, which has an adhesion to an electrode of 30 gf/25 mm or more and a heat shrinkage of 35% or less.

According to the fourth embodiment, there is provided the separator for a secondary battery as defined in any one of the first to the third embodiments, wherein the urethane bond-containing crosslinked polymer is obtained through the crosslinking reaction of at least one crosslinkable polymer during the activation step of the secondary battery.

According to the fifth embodiment, there is provided the separator for a secondary battery as defined in any one of the first to the fourth embodiments, wherein the porous polymer substrate is a polyolefin-based porous polymer substrate.

According to the sixth embodiment, there is provided the separator for a secondary battery as defined in any one of the first to the fifth embodiments, wherein the inorganic particles are inorganic particles having a dielectric constant of 5 or more, inorganic particles having lithium-ion transportability, or a mixture thereof.

According to the seventh embodiment, there is provided a secondary battery including a cathode, an anode and a separator interposed between the cathode and the anode, wherein the separator is the same as defined in any one of the first to the sixth embodiments.

According to the eighth embodiment, there is provided a method for manufacturing a secondary battery including the separator as defined in the first embodiment, the method including the steps of:
preparing slurry containing a plurality of inorganic particles, a crosslinkable polymer and a dispersion medium;
applying the slurry onto at least one surface of a porous polymer substrate, followed by drying, to prepare a preliminary separator having a porous coating layer;
stacking an electrode, including a current collector and an electrode active material layer disposed on at least one surface of the current collector, on the top surface of the porous coating layer of the preliminary separator, while allowing the electrode active material layer to face the porous coating layer, to prepare a preliminary separator-electrode composite;
preparing a secondary battery including the preliminary separator-electrode composite; and
activating the secondary battery,
wherein the crosslinkable polymer of the porous coating layer is subjected to crosslinking during the step of activating the secondary battery to obtain a urethane bond-containing crosslinked polymer.

According to the ninth embodiment, there is provided the method for manufacturing a secondary battery as defined in the eighth embodiment, wherein the crosslinkable polymer contains a hydroxyl group (-OH), an isocyanate group (-NCO) or both.

According to the tenth embodiment, there is provided the method for manufacturing a secondary battery as defined in the eighth or the ninth embodiment, wherein the crosslinkable polymer includes a polyvinylidene-based polymer containing a hydroxyl group (-OH), an isocyanate group (-NCO) or both; a polyacrylic polymer containing a hydroxyl group (-OH), an isocyanate group (-NCO) or both; or two or more of them.

According to the eleventh embodiment, there is provided the method for manufacturing a secondary battery as defined in any one of the eighth to the tenth embodiments, wherein the crosslinkable polymer includes: polyvinylidene fluoride-chlorotrifluoroethylene-graft-(methyl methacrylate-2-isocyanatoethyl acrylate), polyvinylidene fluoride-chlorotrifluoroethylene-graft-(ethyl acrylate-4-hydroxybutyl acrylate), polyvinylidene fluoride-graft-(methyl methacrylate-2-isocayanatoethyl acrylate), polyvinylidene fluoride-chlorotrifluoroethylene-graft-(2-isocyanatoethyl acrylate), polyvinylidene fluoride-graft-(methyl acrylate-2-isocyanatoethyl acrylate), polyvinylidene fluoride-chlorotrifluoroethylene-graft-(methyl acrylate-2-isocyanatoethyl acrylate) , or two or more of them; and ethyl acrylate-acrylonitrile-dimethyl acrylamide-acrylic acid-4-hydroxybutyl acrylate copolymer, ethyl acrylate-acrylonitrile-2-isocyanatoethyl acrylate copolymer, methyl acrylate-acrylonitrile-dimethyl acrylamide-acrylic acid-4-hydroxybutyl acrylate copolymer, ethyl acrylate-acrylonitrile-acrylic acid-4-hydroxybutyl acrylate copolymer, ethyl acrylate-acrylonitrile-dimethyl acrylamide-4-hydroxybutyl acrylate copolymer, ethyl acrylate-dimethyl acryl amide-acrylic acid-4-hydroxybutyl acrylate copolymer, ethyl acrylate-acrylic acid-4-hydroxybutyl acrylate copolymer, ethyl acrylate-4-hydroxybutyl acrylate copolymer, methyl acrylate-acrylonitrile-acrylic acid-4-hydroxybutyl acrylate copolymer, methyl acrylate-acrylonitrile-dimethyl acrylamide-4-hydroxybutyl acrylate copolymer, methyl acrylate-dimethyl acrylamide-acrylic acid-4-hydroxybutyl acrylate copolymer, methyl acrylate-acrylic acid-4-hydroxybutyl acrylate copolymer, methyl acrylate-4-hydroxybutyl acrylate copolymer, or two or more of them.

According to the twelfth embodiment, there is provided the method for manufacturing a secondary battery as defined in any one of the eighth to the eleventh embodiments, wherein the crosslinkable polymer includes polyvinylidene fluoride-chlorotrifluoroethylene-graft-(methyl methacrylate-2-isocyanoethyl acrylate) and ethyl acrylate-acrylonitrile-dimethyl acrylamide-acrylic acid-4-hydroxybutyl acrylate copolymer, or ethyl acrylate-acrylonitrile-2-isocyanatoethyl acrylate copolymer and polyvinylidene fluoride-chlorotrifluoroethylene-graft-(ethyl acrylate-2-isocyanoethyl acrylate).

According to the thirteenth embodiment, there is provided the method for manufacturing a secondary battery as defined in any one of the eighth to the twelfth embodiments, wherein the step of activating the secondary battery includes an initial charging step and a high-temperature aging step.

According to the fourteenth embodiment, there is provided the method for manufacturing a secondary battery as defined in the thirteenth embodiment, wherein the high-temperature aging step is carried out at a temperature of 50°C or higher.

According to the fifteenth embodiment, there is provided the method for manufacturing a secondary battery as defined in the thirteenth or the fourteenth embodiment, which further includes a room-temperature aging step carried out at a temperature of 20-40°C between the initial charging step and the high-temperature aging step.

### Advantageous Effects

According to an embodiment of the present disclosure, the polymer capable of being crosslinked (crosslinkable polymer) present in the porous coating layer of the separator is adhered to the active material layer of an electrode with ease, before crosslinking is carried out, and thus the adhesion between the electrode and the separator (adhesion to the electrode, electrode-separator adhesion) can be improved. On the contrary, when a crosslinked polymer is incorporated directly during the formation of the porous coating layer of the separator according to the related art, the crosslinked polymer is rigid and shows low adhesive property, and thus sufficient adhesion cannot be realized between the separator and the electrode active material layer.

Since the crosslinked polymer contained in the porous coating layer of the separator according to the present disclosure is obtained through the crosslinking of at least one crosslinkable polymer contained in the porous coating layer during the activation step of the secondary battery, there is no need for an additional process after coating of the crosslinkable polymer. **In** other words, in most cases, the coating layer including a crosslinked polymer according to the related art is obtained by applying slurry containing a crosslinkable polymer onto at least one surface of a porous polymer substrate, and then carrying out an additional process (heat treatment, UV treatment, or the like) so that the crosslinkable polymer may be crosslinked. However, according to an embodiment of the present disclosure, the crosslinkable polymer can be crosslinked during the activation step carried out during the manufacture of a battery with no need for such an additional step for crosslinking.

In addition, a crosslinkable polymer is used as a starting material for providing a crosslinked polymer, instead of conventionally used monomers. Therefore, it is possible to prevent dissolution of the monomers in the porous coating layer, when crosslinking is carried out in an electrolyte during the activation step.

Further, the separator according to an embodiment of the present disclosure uses a crosslinked polymer having a low glass transition temperature (T_{g}) in the porous coating layer thereof, and thus can ensure heat resistance and adhesion to an electrolyte merely through the crosslinked polymer, while not using any binder polymer (non-crosslinked polymer) functioning as an adhesive.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.
In one aspect of the present disclosure, there is provided a separator for a secondary battery, including: a porous polymer substrate having a plurality of pores; and a porous coating layer disposed on at least one surface of the porous polymer substrate and including a plurality of inorganic particles and a urethane bond-containing crosslinked polymer, wherein the urethane bond-containing crosslinked polymer is obtained through the urethane crosslinking reaction of at least one crosslinkable polymer containing a urethane reactive functional group,
the urethane bond-containing crosslinked polymer is disposed partially or totally on the surfaces of the inorganic particles so that the inorganic particles may be interconnected and fixed, and the urethane bond-containing crosslinked polymer has a glass transition temperature (T_{g}) of -15 to 32°C.

According to the related art, the heat resistance of a separator is improved by coating the separator with an inorganic material in order to improve the safety of a secondary battery, wherein a highly heat resistant binder is used to further improve the heat resistance through the coating. Herein, when a crosslinked polymer is used as a highly heat resistant binder polymer, an additional crosslinking step is required, processing costs are increased, and the coating layer formed on the separator after crosslinking becomes rigid. Therefore, there is a difficulty in that adhesion to an electrode is reduced during the subsequent process for forming an electrode assembly.

To solve such a difficulty, according to the present disclosure, a crosslinked polymer is not incorporated in advance to the porous coating layer of a separator, but a crosslinkable polymer is incorporated to the porous coating layer to obtain a separator. Then, an electrode assembly is formed by using the separator, and the crosslinkable polymer is allowed to be subjected to crosslinking completely in the activation step after the assemblage of a secondary battery. Herein, in order to carry out crosslinking completely during the activation step, a crosslinkable polymer having a functional group (urethane reactive functional group) capable of forming a urethane crosslinking bond that is reactive under a low temperature condition may be used. In addition, a crosslinkable polymer, not a crosslinkable monomer, is used so that the porous coating layer may not be dissolved in an electrolyte before crosslinking.

In addition, the separator according to the present disclosure includes a crosslinked polymer having a low glass transition temperature (T_{g}) of -15 to 32°C. Therefore, it is possible to ensure heat resistance and adhesion to an electrolyte merely through the crosslinked polymer, while not using any binder polymer (non-crosslinked polymer) functioning as an adhesive.

Particularly, the porous polymer substrate may be a porous polymer film substrate or a porous polymer nonwoven web substrate.

The porous polymer film substrate may be a porous polymer film including polyolefin, such as polyethylene, polypropylene, polybutene or polypentene. Such a polyolefin porous polymer film substrate realizes a shut-down function at a temperature of 80-130°C.

Herein, the polyolefin porous polymer film may be formed of polymers including polyolefin polymers, such as polyethylene, including high-density polyethylene, linear low-density polyethylene, low-density polyethylene or ultrahigh-molecular weight polyethylene, polypropylene, polybutylene, or polypentene, alone or in combination of two or more of them.

In addition, the porous polymer film substrate may be obtained by molding various polymers, such as polyesters, other than polyolefins, into a film shape. Further, the porous polymer film substrate may have a stacked structure of two or more film layers, wherein each film layer may be formed of polymers including the above-mentioned polymers, such as polyolefins or polyesters, alone or in combination of two or more of them.

In addition, the porous polymer film substrate and porous polymer nonwoven web substrate may be formed of polyester, such as polyethylene terephthalate or polybutylene terephthalate, polyacetal, polyamide, polycarbonate, polyimide, polyetherether ketone, polyether sulfone, polyphenylene oxide, polyphenylene sulfide, or the like, alone or in combination, besides the above-mentioned polyolefins.

There is no particular limitation in the thickness of the porous polymer substrate, the porous polymer substrate has a thickness of 1-100 µm, particularly 5-50 µm. Although there is no particular limitation in the size of the pores present in the porous polymer substrate and porosity, the pore size and porosity may be 0.01-50 µm and 10-95%, respectively.

The urethane bond-containing crosslinked polymer has a glass transition temperature (Tg) of -15 to 32°C. The glass transition temperature (Tg) of the urethane bond-containing crosslinked polymer may be -10 to 30°C, 0 to 30°C, 10 to 30°C, -10 to 5°C, or 5 to 30°C. In addition, the glass transition temperature (Tg) of the urethane bond-containing crosslinked polymer may be -10°C or higher, 0°C or higher, 5°C or higher, or 10°C or higher, and 30°C or lower, 10°C or lower, or 5°C or lower.

When the urethane bond-containing crosslinked polymer has a glass transition temperature of lower than -15°C, heat resistance may be degraded. When the glass transition temperature is higher than 32°C, adhesion to an electrode may be degraded undesirably.

In addition, when the glass transition temperature of the urethane bond-containing crosslinked polymer satisfies the above-defied range, any binder polymer (non-crosslinked polymer) functioning as an adhesive during the formation of a porous coating layer may not be used. This is because the crosslinked polymer contained in the porous coating layer of the separator according to the present disclosure has a low glass transition temperature (T_{g}) of -15 to 32°C, and thus can function like the conventional binder polymer. In other words, the crosslinked polymer improves the mechanical properties, such as flexibility and elasticity, of the finally formed porous coating layer, interconnects the inorganic particles and fixes them stably to prevent degradation of the mechanical properties of the separator having the porous coating layer, functions as an adhesive to the active material layer of an electrode, and also functions as an adhesive between the porous polymer substrate and the inorganic particles. As a result, in the separator according to the present disclosure, no binder polymer (non-crosslinked polymer) is used, and the heat resistance and adhesion to an electrode can be ensured merely through the crosslinked polymer.

The urethane bond-containing crosslinked polymer is obtained through the urethane crosslinking reaction of at least one crosslinkable polymer containing a urethane reactive functional group, i.e. a hydroxyl group (-OH), an isocyanate group (-NCO) or both.

According to an embodiment of the present disclosure, the crosslinkable polymer may include: a polyvinylidene-based polymer containing a hydroxyl group (-OH), an isocyanate group (-NCO) or both; a polyacrylic polymer containing a hydroxyl group (-OH), an isocyanate group (-NCO) or both; or two or more of them. In addition, the polyvinylidene-based polymer may be polyvinylidene or polyvinylidene copolymer (e.g. PVDF-CTFE, PVDF-HFP, PVDF-TFE, or the like) further including a repeating unit derived from a monomer containing a hydroxyl group (-OH), an isocyanate group (-NCO) or both. Herein, the copolymer may be a copolymer including different repeating units linked to the backbone thereof, or a graft copolymer including different repeating units linked to the side chain thereof. The monomer containing a hydroxyl group (-OH), an isocyanate group (-NCO) or both may include (meth)alkyl acrylate, or the like. The repeating unit to be grafted may further include a repeating unit derived from a monomer not containing a hydroxyl group (-OH), an isocyanate group (-NCO) or both, besides the monomer containing a hydroxyl group (-OH), an isocyanate group (-NCO) or both.

Particular examples of the polyvinylidene-based polymer as a crosslinkable polymer include polyvinylidene fluoride-chlorotrifluoroethylene-graft-(methyl methacrylate-2-isocyanatoethyl acrylate), polyvinylidene fluoride-chlorotrifluoroethylene-graft-(ethyl acrylate-4-hydroxybutyl acrylate), polyvinylidene fluoride-graft-(methyl methacrylate-2-isocayanatoethyl acrylate), polyvinylidene fluoride-chlorotrifluoroethylene-graft-(2-isocyanatoethyl acrylate), polyvinylidene fluoride-graft-(methyl acrylate-2-isocyanatoethyl acrylate), polyvinylidene fluoride-chlorotrifluoroethylene-graft-(methyl acrylate-2-isocyanatoethyl acrylate) , or the like.

The polyacrylic polymer containing a hydroxyl group (-OH), an isocyanate group (-NCO) or both may be a homopolymer of an acryl monomer containing a hydroxyl group (-OH), an isocyanate group (-NCO) or both, or a copolymer including a repeating unit derived from an acryl monomer containing a hydroxyl group (-OH), an isocyanate group (-NCO) or both with at least one repeating unit derived from another monomer not containing such substituents. Particular examples of the polyacrylic polymer include ethyl acrylate-acrylonitrile-dimethyl acrylamide-acrylic acid-4-hydroxybutyl acrylate copolymer, ethyl acrylate-acrylonitrile-2-isocyanatoethyl acrylate copolymer, methyl acrylate-acrylonitrile-dimethylacryl amide-acrylic acid-4-hydroxybutyl acrylate copolymer, ethyl acrylate-acrylonitrile-acrylic acid-4-hydroxybutyl acrylate copolymer, ethyl acrylate-acrylonitrile-dimethyl acrylamide-4-hydroxybutyl acrylate copolymer, ethyl acrylate-dimethyl acryl amide-acrylic acid-4-hydroxybutyl acrylate copolymer, ethyl acrylate-acrylic acid-4-hydroxybutyl acrylate copolymer, ethyl acrylate-4-hydroxybutyl acrylate copolymer, methyl acrylate-acrylonitrile-acrylic acid-4-hydroxybutyl acrylate copolymer, methyl acrylate-acrylonitrile-dimethyl acrylamide-4-hydroxybutyl acrylate copolymer, methyl acrylate-dimethyl acrylamide-acrylic acid-4-hydroxybutyl acrylate copolymer, methyl acrylate-acrylic acid-4-hydroxybutyl acrylate copolymer, methyl acrylate-4-hydroxybutyl acrylate copolymer, or the like.

According to an embodiment of the present disclosure, the crosslinkable polymer may include polyvinylidene fluoride-chlorotrifluoroethylene-graft-(methyl methacrylate-2-isocyanoethyl acrylate) and ethyl acrylate-acrylonitrile-dimethyl acrylamide-acrylic acid-4-hydroxybutyl acrylate copolymer, or ethyl acrylate-acrylonitrile-2-isocyanatoethyl acrylate copolymer and polyvinylidene fluoride-chlorotrifluoroethylene-graft-(ethyl acrylate-2-isocyanoethyl acrylate).

The urethane bond-containing crosslinked polymer may have a weight average molecular weight of 100,000 or more, 200,000 or more, 300,000 or more, 400,000 or more, or 700,000 or more, and 4,000,000 or less, 700,000 or less, 400,000 or less, or 300,000 or less.

When the weight average molecular weight of the urethane bond-containing crosslinked polymer satisfies the above-defined range, it is possible to prevent the problem of detachment of the porous coating layer from the porous polymer substrate, occurring when the inorganic particles cannot be interconnected and fixed sufficiently due to the dissolution during crosslinking, or the problem of degradation of the heat shrinkage of the separator. In this case, it is also possible to synthesize the crosslinked polymer with ease and to obtain a high yield.

The weight average molecular weight of the urethane bond-containing crosslinked polymer may be determined by using gas permeation chromatography (GPC, Agilent Infinity 1200 system). For example, the weight average molecular weight may be determined in tetrahydrofuran (THF) as a solvent at 35°C and a rate of 1.0 mL/min.

The weight ratio of the inorganic particles to the crosslinked polymer may be 70:30-95:5. When the weight ratio of the inorganic particles to the crosslinked polymer satisfies the above-defined range, it is possible to prevent the problem of a decrease in pore size and porosity of the resultant porous coating layer, caused by an increase in content of the crosslinked polymer. It is also possible to solve the problem of degradation of peeling resistance and heat resistance of the resultant porous coating layer, caused by a decrease in content of the crosslinked polymer.

In the separator according to an embodiment of the present disclosure, the porous coating layer may further include other additives as ingredients thereof, besides the above-described inorganic particles.

According to the present disclosure, non-limiting examples of the inorganic particles may include inorganic particles having a dielectric constant of 5 or more, particularly 10 or more, inorganic particles having lithium-ion transportability, and a mixture thereof.

Non-limiting examples of the inorganic particles having a dielectric constant of 5 or more may include BaTiO₃, Pb(Zr,Ti)O₃ (PZT), Pb₁₋ₓLaₓZr_{1-y}Ti_{y}O₃ (PLZT), Pb(Mg_{1/3}Nb_{2/3})O₃PbTiO₃ (PMN-PT), hafnia (HfO₂), SrTiO₃, SnO₂, CeO₂, MgO, NiO, CaO, ZnO, ZrO₂, Y₂O₃, Al₂O₃, TiO₂, SiC, AlO(OH), Al₂O₃.H₂O, or a mixture thereof.

As used herein, the term 'inorganic particles having lithium-ion transportability' refers to inorganic particles which contain lithium elements and do not store lithium but transport lithium ions. Non-limiting examples of the inorganic particles having lithium-ion transportability include lithium phosphate (Li₃PO₄), lithium titanium phosphate (LiₓTi_{y}(PO₄)₃, 0 < x < 2, 0 < y < 3), lithium aluminum titanium phosphate (LiₓAl_{y}Ti_{z}(PO₄)₃, 0 < x < 2, 0 < y < 1, 0 < z < 3), (LiAlTiP)ₓO_{y}-based glass (1 < x < 4, 0 < y < 13), such as 14Li₂O-9Al₂O₃-38TiO₂-39P₂O₅, lithium lanthanum titanate (LiₓLa_{y}TiO₃, 0 < x < 2, 0 < y < 3), lithium germanium thiophosphate (LiₓGe_{y}P_{z}S_{w}, 0 < x < 4, 0 < y < 1, 0 < z < 1, 0 < w < 5), such as Li_{3.25}Ge_{0.25}P_{0.75}S₄, lithium nitride (LiₓN_{y}, 0 < x < 4, 0 < y < 2), such as Li₃N, SiS₂-based glass (LiₓSi_{y}S_{z}, 0 < x < 3, 0 < y < 2, 0 < z < 4), such as Li₃PO₄-Li₂S-SiS₂, and P₂S₅-based glass (LiₓP_{y}S_{z}, 0 < x < 3, 0 < y < 3, 0 < z < 7), such as LiI-Li₂S-P₂S₅, or a mixture thereof.

Although there is no particular limitation in the thickness of the porous coating layer, the thickness may be 1-10 µm, or 1.5-6 µm. Also, the porosity of the porous coating layer is not particularly limited, but it may be preferably 35-65%.

According to an embodiment of the present disclosure, the porous coating layer may be an organic coating layer using organic slurry or an aqueous coating layer using aqueous slurry. Particularly, in the case of an aqueous coating layer, it is more advantageous in that thin film coating is facilitated and the resistance of the separator is reduced.

According to an embodiment of the present disclosure, the crosslinked polymer of the porous coating layer attaches the inorganic particles to one another (i.e. the crosslinked polymer interconnects and fix the inorganic particles) so that they may retain their binding states. In addition, the inorganic particles and the porous polymer substrate can remain bonded to each other by the crosslinked polymer. The inorganic particles of the porous coating layer may form interstitial volumes, while they are substantially in contact with one another, wherein the interstitial volumes refer to spaces defined by the inorganic particles that are substantially in contact with one another in a closely packed or densely packed structure of the inorganic particles. The interstitial volumes formed among the inorganic particles may become vacant spaces to form pores.

According to an embodiment of the present disclosure, the separator may have a heat shrinkage of 35% or less, 1-35%, 5-33%, or 5-19%.

Herein, each of the heat shrinkage of the separator before crosslinking and that of the separator (finished separator) after activation can be obtained by preparing a separator specimen having a size of 5 cm x 5 cm, storing the specimen at 150°C for 30 minutes, and calculating the heat shrinkage according to the formula of [(Initial length - Length after heat shrinking at 150°C/30 min.) / (Initial length)] x 100. The heat shrinkage of the separator after activation may be determined by preparing a crosslinked separator after storing a separator before crosslinking under the same battery activation condition without a step of assembling with electrodes, and calculating the heat shrinkage of the obtained finished crosslinked separator under the same condition as described above.

According to an embodiment of the present disclosure, the separator may show an adhesion to an electrode of 30 gf/mm or more, 30-90 gf/25 mm, 35-90 gf/25 mm, or 70-90 gf/25 mm.

Herein, the adhesion to an electrode may be determined as follows.

The separator was laminated with an electrode (anode or cathode) and then the resultant structure was inserted between polyethylene terephthalate (PET) films having a thickness of 100 µm and adhered thereto by using a flat press. Herein, the flat press was heated at 90°C under a pressure of 8 MPa for 1 second. The end portion of the adhered separator and electrode was mounted to an UTM instrument (LLOYD Instrument LF Plus), and force was applied at a rate of 300 mm/min in both directions. Then, the force required for separating the separator from the electrode is determined.

In another aspect of the present disclosure, there is provided a method for manufacturing a secondary battery including the separator according to an embodiment of the present disclosure, the method including the steps of:
preparing slurry containing a plurality of inorganic particles, a crosslinkable polymer and a dispersion medium;
applying the slurry onto at least one surface of a porous polymer substrate, followed by drying, to prepare a preliminary separator having a porous coating layer;
stacking an electrode, including a current collector and an electrode active material layer disposed on at least one surface of the current collector, on the top surface of the porous coating layer of the preliminary separator, while allowing the electrode active material layer to face the porous coating layer, to prepare a preliminary separator-electrode composite;
preparing a secondary battery including the preliminary separator-electrode composite; and
activating the secondary battery,
wherein the crosslinkable polymer of the porous coating layer is subjected to crosslinking during the step of activating the secondary battery to obtain a urethane bond-containing crosslinked polymer.

Hereinafter, each of the steps will be explained in more detail.

First, in order to form a porous coating layer, slurry may be prepared by dissolving a crosslinkable polymer in a dispersion medium, adding inorganic particles thereto and dispersing them. The inorganic particles may be added after they are pulverized in advance to a predetermined average particle diameter. Otherwise, the inorganic particles may be added to a solution of the crosslinkable polymer, and then pulverized and dispersed, while controlling them to have a predetermined average particle diameter by using a ball milling process, or the like.

Although there is no particular limitation in the process for coating the slurry for forming a porous coating layer onto the porous polymer substrate, it is preferred to use a slot coating or dip coating process. A slot coating process includes coating slurry supplied through a slot die onto the whole surface of a substrate and is capable of controlling the thickness of a coating layer depending on the flux supplied from a metering pump. In addition, a dip coating process includes dipping a substrate into a tank containing a slurry to carry out coating and is capable of controlling the thickness of a coating layer depending on the concentration of the slurry and the rate of removing the substrate from the tank. Further, in order to control the coating thickness more precisely, it is possible to carry out post-metering through a Mayer bar or the like, after dipping.

Then, the porous polymer substrate coated with the slurry may be dried by using a dryer, such as an oven, thereby forming a porous coating layer on at least one surface of the porous polymer substrate.

Non-limiting examples of the dispersion medium used herein may include any one selected from acetone, tetrahydrofuran, methylene chloride, chloroform, dimethyl formamide, N-methyl-2-pyrrolidone, methyl ethyl ketone, cyclohexane, methanol, ethanol, isopropyl alcohol, propanol and water, or a mixture of two or more of them.

After coating the slurry on the porous polymer substrate, the coated porous polymer substrate may be dried at 90-180°C or 100-150°C to remove the dispersion medium.

In this manner, prepared is a preliminary separator including a porous polymer substrate, and a porous coating layer containing a crosslinkable polymer and inorganic particles and disposed on at least one surface of the porous polymer substrate.

The crosslinkable polymer contains a urethane reactive functional group, such as a hydroxyl group (-OH), an isocyanate group (-NCO) or both, and then is converted into a urethane bond-containing crosslinked polymer through urethane crosslinking.

Reference will be made to the above description about the crosslinkable polymer used herein.

Then, an electrode including a current collector and an electrode active material layer disposed on at least one surface of the current collector is stacked on the top surface of the porous coating layer of the preliminary separator, and the electrode active material layer is allowed to be in contact with the porous coating layer, thereby preparing a preliminary separator-electrode composite.

The preliminary separator-electrode composite is introduced to a battery casing and an electrolyte is injected thereto to prepare a secondary battery.

A non-aqueous electrolyte is injected to the battery casing in which the preliminary separator-electrode composite is received, followed by sealing, and then the sealed preliminary battery may be subjected to an activation step of initially charging the battery in order to activate the electrode active material and to form a solid electrolyte interface (SEI) film on the electrode surface. In addition, an aging step may be further carried out so that the electrolyte injected before the activation step may infiltrate sufficiently into the electrode and the separator.

While the electrode active material is activated and the SEI film is formed in the above-described manner, gases may be generated in the battery through the decomposition of the electrolyte, or the like. As mentioned above, according to the related art, such gases generated during the initial charging step may be discharged to the outside of the battery by reopening the battery casing or by cutting a portion of the battery casing.

Herein, during the step of activating the secondary battery, the crosslinkable polymer of the porous coating layer is crosslinked to obtain a urethane bond-containing crosslinked polymer.

The step of activating the secondary battery is an initial charging step for activating the electrode active material and for forming an SEI film on the electrode surface. In addition, an aging step may be further carried out so that the electrolyte injected before the activation step may infiltrate sufficiently into the electrode and the separator.

According to an embodiment of the present disclosure, the step of activating the secondary battery may include an initial charging step and a high-temperature aging step, or an initial charging step, a room-temperature aging step and a high-temperature aging step.

The initial charging may be carried out at a state of charge (SOC) of 10% or more, 30% or more, or 50% or more. Although the upper limit of SOC is not particularly limited, it may be 100% or 90%. In addition, the initial charging may be carried out with a cut-off voltage of 3.5 V or more, 3.5-4.5 V, or 3.65-4.5 V.

The initial charging may be carried out at a C-rate of 0.05-2 C, or 0.1-2 C.

The high-temperature aging step functions to provide a condition under which the crosslinkable polymer of the porous coating layer may be crosslinked. For example, the high-temperature aging step may be carried out at a temperature of 50°C or higher, 50-100°C, 60-100°C, or 60-80°C. The high-temperature aging step may be carried out for 0.5-2 days, or 0.5-1.5 days.

In addition, the room temperature-aging step may be added between the initial charging step and the high-temperature aging step, and may be carried out at a temperature of 20-40°C, 23-35°C, 23-30°C, 23-27°C, or 23-25°C. In addition, the room temperature-aging step may be carried out for 1-7 days, or 1-5 days.

According to an embodiment of the present disclosure, the step of activating the secondary battery may be carried out by charging the secondary battery under a constant current (CC) condition of 0.1 C to 3.65 V at SOC 30%, storing the secondary battery at room temperature (25°C) for 3 days, and aging the secondary battery by storing it at a high temperature of 60°C for 1 day.

In still another aspect of the present disclosure, there is provided an electrochemical device including a cathode, an anode and a separator interposed between the cathode and the anode, wherein the separator is the above-described separator according to an embodiment of the present disclosure.

The electrochemical device includes any device which carries out electrochemical reaction, and particular examples thereof include all types of primary batteries, secondary batteries, fuel cells, solar cells or capacitors, such as super capacitor devices. Particularly, among the secondary batteries, lithium secondary batteries, including lithium metal secondary batteries, lithium-ion secondary batteries, lithium polymer secondary batteries or lithium-ion polymer batteries, are preferred.

The two electrodes, cathode and anode, used in combination with the separator according to the present disclosure are not particularly limited, and may be obtained by allowing electrode active materials to be bound to an electrode current collector through a method generally known in the art. Among the electrode active materials, non-limiting examples of a cathode active material include conventional cathode active materials that may be used for the cathodes for conventional electrochemical devices. Particularly, lithium manganese oxides, lithium cobalt oxides, lithium nickel oxides, lithium iron oxides or lithium composite oxides containing a combination thereof are used preferably. Non-limiting examples of an anode active material include conventional anode active materials that may be used for the anodes for conventional electrochemical devices. Particularly, lithium-intercalating materials, such as lithium metal or lithium alloys, carbon, petroleum coke, activated carbon, graphite or other carbonaceous materials, are used preferably. Non-limiting examples of a cathode current collector include foil made of aluminum, nickel or a combination thereof. Non-limiting examples of an anode current collector include foil made of copper, gold, nickel, copper alloys or a combination thereof.

The electrolyte that may be used in the electrochemical device according to the present disclosure is a salt having a structure of A⁺B⁻, wherein A⁺ includes an alkali metal cation such as Li⁺, Na⁺, K⁺ or a combination thereof, and B⁻ includes an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻ or a combination thereof, the salt being dissolved or dissociated in an organic solvent including propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone (γ-butyrolactone) or a combination thereof. However, the present disclosure is not limited thereto.

Injection of the electrolyte may be carried out in an adequate step during the process for manufacturing a battery depending on the manufacturing process of a final product and properties required for a final product. In other words, injection of the electrolyte may be carried out before the assemblage of a battery or in the final step of the assemblage of a battery.

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### Example 1

First, 15 parts by weight of polyvinylidene fluoride-chlorotrifluoroethylene (PVDF-CTFE)-graft-(methyl methacrylate (MMA)-2-isocyanatoethyl acrylate (AOI)) (molar ratio of PVDF-CTFE:MMA:AOI = 70:18:12) and 15 parts by weight of ethyl acrylate (EA)-acrylonitrile (AN)-dimethyl acrylamide (DMMA)-acrylic acid (AA)-4-hydroxybutyl acrylate copolymer (HBA) (molar ratio of EA:AN:DMAA:AA:HBA = 40:15:30:0.5:14.5), as crosslinkable polymers, were added to 93 parts by weight of acetone as a dispersion medium, and the mixture was agitated at 60°C for about 3 hours to prepare a crosslinkable polymer solution. Next, 70 parts by weight of alumina (Al₂O₃) particles having an average particle diameter of 500 nm were added to 75 parts by weight of acetone and dispersed therein to obtain a dispersion, and then the dispersion was agitated with the crosslinkable polymer solution to obtain slurry for a porous coating layer.

The obtained slurry was coated on both surfaces of a polyethylene porous membrane (resistance 0.66 ohm, air permeability 142 sec/100 cc) having a thickness of 9 µm through a dip coating process and dried in an oven at 100° C to obtain a preliminary separator having porous coating layers on both surfaces thereof. Herein, the total thickness of the porous coating layers was 6 µm.

Then, 96.7 parts by weight of Li[Ni_{0.6}Mn_{0.2}Co_{0.2}]O₂ functioning as a cathode active material, 1.3 parts by weight of graphite functioning as a conductive material and 2.0 parts by weight of polyvinylidene fluoride functioning as a binder were mixed to prepare a cathode mixture. The obtained cathode mixture was dispersed in 1-methyl-2-pyrrolidone functioning as a solvent to obtain cathode mixture slurry. The slurry was coated on both surfaces of aluminum foil having a thickness of 20 µm, followed by drying and pressing, to obtain a cathode.

In addition, 97.6 parts by weight of artificial graphite and natural graphite functioning as anode active materials (weight ratio 90:10), and 1.2 parts by weight of styrene-butadiene rubber (SBR) and 1.2 parts by weight of carboxymethyl cellulose (CMC) functioning as binders were mixed to prepare an anode mixture. The anode mixture was dispersed in ion exchange water functioning as a solvent to prepare anode mixture slurry. The slurry was coated on both surfaces of copper foil having a thickness of 20 µm, followed by drying and pressing, to obtain an anode.

After that, LiPF₆ was dissolved in an organic solvent containing a mixture of ethylene carbonate (EC), propylene carbonate (PC) and diethyl carbonate (DEC) at a volume ratio of 3:3:4 to a concentration of 1.0 M, thereby providing a non-aqueous electrolyte.

The preliminary separator was interposed between the cathode and the anode in such a manner that at least one layer of the cathode active material layer and the anode active material layer might face the porous coating layer of the preliminary separator, thereby providing a preliminary separator-electrode composite. The preliminary separator-electrode composite was received in a pouch and the electrolyte was injected thereto to obtain a secondary battery.

Then, the secondary battery provided with the preliminary separator was charged under a constant current (CC) condition of 0.1 C to 3.65 V at SOC 30%, and then subjected to an activation step through an aging step of storing it at room temperature (25°C) for 3 days and at a high temperature of 60°C for 1 day.

During the activation step, the isocyanate groups and hydroxyl groups of the crosslinkable polymers contained in the porous coating layer of the preliminary separator reacted with each other through addition reaction to perform urethane crosslinking, thereby providing a urethane bond-containing crosslinked polymer.

As a result, a separator for a secondary battery including the urethane bond-containing crosslinked polymer in the porous coating layer, and a secondary battery including the separator were obtained finally.

### Example 2

A separator for a secondary battery and a secondary battery including the same were obtained in the same manner as Example 1, except that 15 parts by weight of ethyl acrylate (EA)-acrylonitrile (AN)-2-isocyanatoethyl acrylate (AOI) copolymer (molar ratio of EA:AN:AOI = 10:80:10) and 15 parts by weight of polyvinylidene fluoride-chlorotrifluoroethylene (PVDF-CTFE)-graft-(ethyl acrylate (EA)-4-hydroxybutyl acrylate (HBA)) (molar ratio of PVDF-CTFE:EA:HBA = 45:44:11) were used as crosslinkable polymers.

### Example 3

A separator for a secondary battery and a secondary battery including the same were obtained in the same manner as Example 1, except that 15 parts by weight of ethyl acrylate (EA)-acrylonitrile (AN)-2-isocyanatoethyl acrylate (AOI) copolymer (molar ratio of EA:AN:AOI = 80:10:10) and 15 parts by weight of polyvinylidene fluoride-chlorotrifluoroethylene (PVDF-CTFE)-graft-(ethyl acrylate (EA)-4-hydroxybutyl acrylate (HBA)) (molar ratio of PVDF-CTFE:EA:HBA = 45:44:11) were used as crosslinkable polymers.

### Comparative Example 1

A separator for a secondary battery and a secondary battery including the same were obtained in the same manner as Example 1, except that 15 parts by weight of polyvinylidene fluoride-chlorotrifluoroethylene (PVDF-CTFE)-graft-(methyl methacrylate (MMA)-2-isocyanatoethyl acrylate (AOI)) (molar ratio of PVDF-CTFE:MMA:AOI = 40:48:12) and 15 parts by weight of ethyl acrylate (EA)-acrylonitrile (AN)-dimethyl acrylamide (DMAA)-acrylic acid (AA)-4-hydroxybutyl acrylate (HBA) copolymer (molar ratio of EA:AN:DMAA:AA:HBA = 40:15:30:0.5:14.5) were used as crosslinkable polymers.

### Comparative Example 2

A separator for a secondary battery and a secondary battery including the same were obtained in the same manner as Example 1, except that 15 parts by weight of polyvinylidene fluoride-chlorotrifluoroethylene (PVDF-CTFE)-graft-(methyl methacrylate (MMA)-2-isocyanatoethyl acrylate (AOI)) (molar ratio of PVDF-CTFE:MMA:AOI = 60:28:12) and 15 parts by weight of ethyl acrylate (EA)-acrylonitrile (AN)-dimethyl acrylamide (DMAA)-acrylic acid (AA)-4-hydroxybutyl acrylate (HBA) copolymer (molar ratio of EA:AN:DMAA:AA:HBA = 40:15:30:0.5:14.5) were used as crosslinkable polymers.

### Comparative Example 3

A separator for a secondary battery and a secondary battery including the same were obtained in the same manner as Example 1, except that 15 parts by weight of ethyl acrylate (EA)-acrylonitrile (AN)-2-isocyanatoethyl acrylate (AOI) copolymer (molar ratio of EA:AN:AOI = 85:5:10) and 15 parts by weight of polyvinylidene fluoride-chlorotrifluoroethylene (PVDF-CTFE)-graft-(ethyl acrylate (EA)-4-hydroxybutyl acrylate (HBA)) (molar ratio of PVDF-CTFE:EA:HBA = 45:44:11) were used as crosslinkable polymers.

### Test Results

Each of the separators according to Examples 1-3 and Comparative Examples 1-3 was evaluated in terms of T_{g} of the crosslinked polymer, content of the crosslinked polymer in the porous coating layer, weight average molecular weight of the crosslinked polymer, electrode-separator adhesion and heat shrinkage. The results are shown in the following Table 1.

Particularly, each test method is as follows.

### (1) T_{g} (°C) of Crosslinked Polymer

T_{g} of the crosslinked polymer contained in the porous coating layer in each of the separators according to Examples 1-3 and Comparative Examples 1-3 was determined by using a differential scanning calorimeter (TA Instrument).

### (2) Content of Crosslinked Polymer in Porous Coating Layer

The content of the crosslinked polymer in the porous coating layer was taken as the total content of the crosslinkable polymer in the solid content of the slurry for a porous coating layer.

### (3) Determination of Weight Average Molecular Weight of Crosslinked Polymer

The weight average molecular weight of the crosslinked polymer was determined by using gas permeation chromatography (Agilent Infinity 1200 system) in tetrahydrofuran (THF) as a solvent at 35°C and a rate of 1.0 mL/min.

### (4) Evaluation of Electrode-Separator Adhesion (gf/25 mm)

An active material (natural graphite and artificial graphite (weight ratio 5:5)), a conductive material (Super P) and a binder (polyvinylidene fluoride (PVDF)) were mixed at a weight ratio of 92:2:6, the resultant mixture was dispersed in water to form slurry, and the slurry was coated on copper foil to obtain an anode. The anode was cut into a size of 25 mm x 70 mm.

Each of the separators according to Examples 1-3 and Comparative Examples 1-3 was cut into a size of 25 mm x 70 mm.

The prepared separator was laminated with the anode, and then the resultant structure was inserted between PET films having a thickness of 100 µm and adhered thereto by using a flat press. Herein, the flat press was heated at 90°C under a pressure of 8 MPa for 1 second.

The end portion of the adhered separator and anode was mounted to an UTM instrument (LLOYD Instrument LF Plus), and force was applied at a rate of 300 mm/min in both directions. The force required for separating the separator from the anode was measured.

### (5) Evaluation of Heat Shrinkage

The heat shrinkage of a separator after activation was determined by preparing a crosslinked separator after storing a separator before crosslinking under the same battery activation condition without a step of assembling with electrodes, and calculating the heat shrinkage of the obtained finished crosslinked separator under the same condition as described above, i.e. by preparing a specimen of each separator into a size of 5 cm x 5 cm, allowing each specimen to stand at 150°C for 30 minutes, and then calculating the heat shrinkage according to the formula of Heat Shrinkage (%) = [(Initial length - Length after heat shrinking at 150°C for 30 minutes) / (Initial length)] x 100.

**[Table 1]**

| | T_{g} (°C) of crosslinked polymer | Content of crosslinked polymer in porous coating layer (wt%) | Weight average molecular weight of crosslinked polymer (Mw) | Electrode-separator adhesion (gf/25mm) | Heat shrinkage (%) |
|---|---|---|---|---|---|
| Comp. Ex. 1 | 45 | 30 | 300,000 | 12 | 2 |
| Comp. Ex. 2 | 35 | 30 | 300,000 | 24 | 2 |
| Ex. 1 | 30 | 30 | 300,000 | 35 | 5 |
| Ex. 2 | 5 | 30 | 300,000 | 70 | 19 |
| Ex. 3 | -10 | 30 | 300,000 | 90 | 33 |
| Comp. Ex. 3 | -20 | 30 | 300,000 | 114 | 50 |

Referring to Table 1, each of the separators containing a urethane bond-containing crosslinked polymer having a glass transition temperature (T_{g}) of -15 to 32°C in the porous coating layer according to Examples 1-3 shows excellent characteristics in terms of electrode-separator adhesion and heat shrinkage. On the contrary, each of the separators containing a urethane bond-containing crosslinked polymer having a glass transition temperature (T^{g}) of higher than 32°C in the porous coating layer according to Comparative Examples 1 and 2 shows significantly reduced electrode-separator adhesion, and the separator containing a urethane bond-containing crosslinked polymer having a glass transition temperature (T_{g}) of lower than -15°C in the porous coating layer according to Comparative Example 3 shows significantly degraded heat shrinking characteristics.

## Claims

1. A separator for a secondary battery, comprising:
a porous polymer substrate having a plurality of pores; and
a porous coating layer disposed on at least one surface of the porous polymer substrate and comprising a plurality of inorganic particles and a urethane bond-containing crosslinked polymer,
wherein the urethane bond-containing crosslinked polymer is obtained through the urethane crosslinking reaction of at least one crosslinkable polymer containing a urethane reactive functional group,
the urethane bond-containing crosslinked polymer is disposed partially or totally on the surfaces of the inorganic particles so that the inorganic particles are interconnected and fixed, and
the urethane bond-containing crosslinked polymer has a glass transition temperature (Tg) of -15 to 32°C as determined by differential scanning calorimetry.

2. The separator for a secondary battery according to claim 1, wherein the urethane bond-containing crosslinked polymer has a glass transition temperature (Tg) of -10 to 30°C as determined by differential scanning calorimetry.

3. The separator for a secondary battery according to claim 1, which has an adhesion to an electrode of 30 gf/25 mm or more and a heat shrinkage of 35% or less, wherein the adhesion and the heat shrinkage are determined according to the description.

4. The separator for a secondary battery according to claim 1, wherein the urethane bond-containing crosslinked polymer is obtained through the urethane crosslinking reaction of at least one crosslinkable polymer containing a urethane reactive functional group during the activation step of the secondary battery.

5. The separator for a secondary battery according to claim 1, wherein the porous polymer substrate is a polyolefin-based porous polymer substrate.

6. The separator for a secondary battery according to claim 1, wherein the inorganic particles are inorganic particles having a dielectric constant of 5 or more, inorganic particles having lithium-ion transportability, or a mixture thereof.

7. A secondary battery comprising a cathode, an anode and a separator interposed between the cathode and the anode, wherein the separator is the same as defined in any one of claims 1 to 6.

8. A method for manufacturing a secondary battery comprising the separator as defined in claim 1, the method comprising the steps of:
preparing slurry containing a plurality of inorganic particles, a crosslinkable polymer and a dispersion medium;
applying the slurry onto at least one surface of a porous polymer substrate, followed by drying, to prepare a preliminary separator having a porous coating layer;
stacking an electrode, comprising a current collector and an electrode active material layer disposed on at least one surface of the current collector, on the top surface of the porous coating layer of the preliminary separator, while allowing the electrode active material layer to face the porous coating layer, to prepare a preliminary separator-electrode composite;
preparing a secondary battery comprising the preliminary separator-electrode composite; and
activating the secondary battery,
wherein the crosslinkable polymer of the porous coating layer is subjected to crosslinking during the step of activating the secondary battery to obtain a urethane bond-containing crosslinked polymer.

9. The method for manufacturing a secondary battery according to claim 8, wherein the crosslinkable polymer contains a hydroxyl group (-OH), an isocyanate group (-NCO) or both.

10. The method for manufacturing a secondary battery according to claim 8, wherein the crosslinkable polymer comprises a polyvinylidene-based polymer containing a hydroxyl group (-OH), an isocyanate group (-NCO) or both; a polyacrylic polymer containing a hydroxyl group (-OH), an isocyanate group (-NCO) or both; or two or more of them.

11. The method for manufacturing a secondary battery according to claim 8, wherein the crosslinkable polymer comprises: polyvinylidene fluoride-chlorotrifluoroethylene-graft-(methyl methacrylate-2-isocyanatoethyl acrylate), polyvinylidene fluoride-chlorotrifluoroethylene-graft-(ethyl acrylate-4-hydroxybutyl acrylate), polyvinylidene fluoride-graft-(methyl methacrylate-2-isocayanatoethyl acrylate), polyvinylidene fluoride-chlorotrifluoroethylene-graft-(2-isocyanatoethyl acrylate), polyvinylidene fluoride-graft-(methyl acrylate-2-isocyanatoethyl acrylate), polyvinylidene fluoride-chlorotrifluoroethylene-graft-(methyl acrylate-2-isocyanatoethyl acrylate) , or two or more of them; and ethyl acrylate-acrylonitrile-dimethyl acrylamide-acrylic acid-4-hydroxybutyl acrylate copolymer, ethyl acrylate-acrylonitrile-2-isocyanatoethyl acrylate copolymer, methyl acrylate-acrylonitrile-dimethylacryl amide-acrylic acid-4-hydroxybutyl acrylate copolymer, ethyl acrylate-acrylonitrile-acrylic acid-4-hydroxybutyl acrylate copolymer, ethyl acrylate-acrylonitrile-dimethyl acrylamide-4-hydroxybutyl acrylate copolymer, ethyl acrylate-dimethyl acryl amide-acrylic acid-4-hydroxybutyl acrylate copolymer, ethyl acrylate-acrylic acid-4-hydroxybutyl acrylate copolymer, ethyl acrylate-4-hydroxybutyl acrylate copolymer, methyl acrylate-acrylonitrile-acrylic acid-4-hydroxybutyl acrylate copolymer, methyl acrylate-acrylonitrile-dimethyl acrylamide-4-hydroxybutyl acrylate copolymer, methyl acrylate-dimethyl acrylamide-acrylic acid-4-hydroxybutyl acrylate copolymer, methyl acrylate-acrylic acid-4-hydroxybutyl acrylate copolymer, methyl acrylate-4-hydroxybutyl acrylate copolymer, or two or more of them.

12. The method for manufacturing a secondary battery according to claim 8, wherein the crosslinkable polymer comprises polyvinylidene fluoride-chlorotrifluoroethylene-graft-(methyl methacrylate-2-isocyanoethyl acrylate) and ethyl acrylate-acrylonitrile-dimethyl acrylamide-acrylic acid-4-hydroxybutyl acrylate copolymer, or ethyl acrylate-acrylonitrile-2-isocyanatoethyl acrylate copolymer and polyvinylidene fluoride-chlorotrifluoroethylene-graft-(ethyl acrylate-2-isocyanoethyl acrylate).

13. The method for manufacturing a secondary battery according to claim 8, wherein the step of activating the secondary battery comprises an initial charging step and a high-temperature aging step.

14. The method for manufacturing a secondary battery according to claim 13, wherein the high-temperature aging step is carried out at a temperature of 50°C or higher.

15. The method for manufacturing a secondary battery according to claim 13, which further comprises a room-temperature aging step carried out at a temperature of 20-40°C between the initial charging step and the high-temperature aging step.

## Patentansprüche

1. Separator für eine Sekundärbatterie, umfassend:
ein poröses Polymersubstrat mit mehreren Poren; und
eine poröse Beschichtungsschicht, die auf mindestens einer Oberfläche des porösen Polymersubstrats angeordnet ist und mehrere anorganische Partikel und ein urethanbindungshaltiges vernetztes Polymer umfasst,
worin das urethanbindungshaltige vernetzte Polymer durch die Urethanvernetzungsreaktion mindestens eines vernetzbaren Polymers, das eine urethanreaktive funktionelle Gruppe enthält, erhalten wird,
wobei das urethanbindungshaltige vernetzte Polymer teilweise oder vollständig auf den Oberflächen der anorganischen Partikel angeordnet ist, sodass die anorganischen Partikel miteinander verbunden und fixiert sind, und
wobei das urethanbindungshaltige vernetzte Polymer eine Glasübergangstemperatur (Tg) von -15 bis 32°C aufweist, bestimmt durch dynamische Differenzkalorimetrie.

2. Separator für eine Sekundärbatterie gemäß Anspruch 1, worin das urethanbindungshaltige vernetzte Polymer eine Glasübergangstemperatur (Tg) von -10 bis 30°C aufweist, bestimmt durch dynamische Differenzkalorimetrie.

3. Separator für eine Sekundärbatterie gemäß Anspruch 1, der eine Haftung an eine Elektrode von 30 gf/25 mm oder mehr und eine Wärmeschrumpfung von 35% oder weniger aufweist, worin die Haftung und die Wärmeschrumpfung gemäß der Beschreibung bestimmt werden.

4. Separator für eine Sekundärbatterie gemäß Anspruch 1, worin das urethanbindungshaltige vernetzte Polymer durch die Urethanvernetzungsreaktion mindestens eines vernetzbaren Polymers, das eine urethanreaktive funktionelle Gruppe enthält, während des Aktivierungsschritts der Sekundärbatterie erhalten wird.

5. Separator für eine Sekundärbatterie gemäß Anspruch 1, worin das poröse Polymersubstrat ein polyolefinbasiertes poröses Polymersubstrat ist.

6. Separator für eine Sekundärbatterie gemäß Anspruch 1, worin die anorganischen Partikel anorganische Partikel mit einer Dielektrizitätskonstante von 5 oder mehr, anorganische Partikel mit Lithium-Ionen-Transportfähigkeit oder eine Mischung davon sind.

7. Sekundärbatterie, umfassend eine Kathode, eine Anode und einen zwischen der Kathode und der Anode angeordneten Separator, worin der Separator derselbe ist wie in einem der Ansprüche 1 bis 6 definiert.

8. Verfahren zur Herstellung einer Sekundärbatterie, umfassend den gemäß Anspruch 1 definierten Separator, das Verfahren umfassend die folgenden Schritte:
Herstellen einer Aufschlämmung, enthaltend mehrere anorganische Partikel, ein vernetzbares Polymer und ein Dispersionsmedium;
Auftragen der Aufschlämmung auf mindestens eine Oberfläche eines porösen Polymersubstrats, gefolgt von Trocknen, um einen vorläufigen Separator mit einer porösen Beschichtungsschicht herzustellen;
Stapeln einer Elektrode, umfassend einen Stromkollektor und eine auf mindestens einer Oberfläche des Stromkollektors angeordnete Elektrodenaktivmaterialschicht, auf der oberen Oberfläche der porösen Beschichtungsschicht des vorläufigen Separators, wobei die Elektrodenaktivmaterialschicht zur porösen Beschichtungsschicht hin ausgerichtet ist, um einen vorläufigen Separator-Elektroden-Verbund herzustellen;
Herstellen einer Sekundärbatterie, umfassend den vorläufigen Separator-Elektroden-Verbund; und
Aktivieren der Sekundärbatterie,
worin das vernetzbare Polymer der porösen Beschichtungsschicht während des Schritts des Aktivierens der Sekundärbatterie einer Vernetzung unterzogen wird, um ein urethanbindungshaltiges vernetztes Polymer zu erhalten.

9. Verfahren zur Herstellung einer Sekundärbatterie gemäß Anspruch 8, worin das vernetzbare Polymer eine Hydroxylgruppe (-OH), eine Isocyanatgruppe (-NCO) oder beide enthält.

10. Verfahren zur Herstellung einer Sekundärbatterie gemäß Anspruch 8, worin das vernetzbare Polymer ein Polyvinyliden-basiertes Polymer, enthaltend eine Hydroxylgruppe (-OH), eine Isocyanatgruppe (-NCO) oder beide; ein Polyacrylpolymer, enthaltend eine Hydroxylgruppe (-OH), eine Isocyanatgruppe (-NCO) oder beide; oder zwei oder mehr davon umfasst.

11. Verfahren zur Herstellung einer Sekundärbatterie gemäß Anspruch 8, worin das vernetzbare Polymer umfasst:
Polyvinylidenfluorid-Chlortrifluorethylen-Pfropf-(Methylmethacrylat-2-Isocyanatoethylacrylat), Polyvinylidenfluorid-Chlortrifluorethylen-Pfropf-(Ethylacrylat-4-Hydroxybutylacrylat), Polyvinylidenfluorid-Pfropf-(Methylmethacrylat-2-Isocyanatoethylacrylat), Polyvinylidenfluorid-Chlortrifluorethylen-Pfropf-(2-Isocyanatoethylacrylat), Polyvinylidenfluorid-Pfropf-(Methylacrylat-2-Isocyanatoethylacrylat), Polyvinylidenfluorid-Chlortrifluorethylen-Pfropf-(Methylacrylat-2-Isocyanatoethylacrylat) oder zwei oder mehr davon; und
Ethylacrylat-Acrylnitril-Dimethylacrylamid-Acrylsäure-4-Hydroxybutylacrylat-Copolymer, Ethylacrylat-Acrylnitril-2-Isocyanatoethylacrylat-Copolymer, Methylacrylat-Acrylnitril-Dimethylacrylamid-Acrylsäure-4-Hydroxybutylacrylat-Copolymer, Ethylacrylat-Acrylnitril-Acrylsäure-4-Hydroxybutylacrylat-Copolymer, Ethylacrylat-Acrylnitril-Dimethylacrylamid-4-Hydroxybutylacrylat-Copolymer, Ethylacrylat-Dimethylacrylamid-Acrylsäure-4-Hydroxybutylacrylat-Copolymer, Ethylacrylat-Acrylsäure-4-Hydroxybutylacrylat-Copolymer, Ethylacrylat-4-Hydroxybutylacrylat-Copolymer, Methylacrylat-Acrylnitril-Acrylsäure-4-Hydroxybutylacrylat-Copolymer, Methylacrylat-Acrylnitril-Dimethylacrylamid-4-Hydroxybutylacrylat-Copolymer, Methylacrylat-Dimethylacrylamid-Acrylsäure-4-Hydroxybutylacrylat-Copolymer, Methylacrylat-Acrylsäure-4-Hydroxybutylacrylat-Copolymer, Methylacrylat-4-Hydroxybutylacrylat-Copolymer oder zwei oder mehr davon.

12. Verfahren zur Herstellung einer Sekundärbatterie gemäß Anspruch 8, worin das vernetzbare Polymer Polyvinylidenfluorid-Chlortrifluorethylen-Pfropf-(Methylmethacrylat-2-Isocyanoethylacrylat) und Ethylacrylat-Acrylnitril-Dimethylacrylamid-Acrylsäure-4-Hydroxybutylacrylat-Copolymer oder Ethylacrylat-Acrylnitril-2-Isocyanatoethylacrylat-Copolymer und Polyvinylidenfluorid-Chlortrifluorethylen-Pfropf-(Ethylacrylat-2-Isocyanoethylacrylat) umfasst.

13. Verfahren zur Herstellung einer Sekundärbatterie gemäß Anspruch 8, worin der Schritt des Aktivierens der Sekundärbatterie einen initialen Ladeschritt und einen Hochtemperatur-Alterungsschritt umfasst.

14. Verfahren zur Herstellung einer Sekundärbatterie gemäß Anspruch 13, worin der Hochtemperatur-Alterungsschritt bei einer Temperatur von 50°C oder höher durchgeführt wird.

15. Verfahren zur Herstellung einer Sekundärbatterie gemäß Anspruch 13, das ferner einen Raumtemperatur-Alterungsschritt umfasst, der bei einer Temperatur von 20 bis 40 °C zwischen dem initialen Ladeschritt und dem Hochtemperatur-Alterungsschritt durchgeführt wird.

## Revendications

1. Séparateur pour une batterie secondaire, comprenant :
un substrat polymère poreux présentant une pluralité de pores ; et
une couche poreuse de revêtement disposée sur au moins une surface du substrat polymère poreux et comprenant une pluralité de particules inorganiques et un polymère réticulé contenant une liaison uréthane,
dans lequel le polymère réticulé contenant une liaison uréthane est obtenu par la réaction de réticulation d'uréthane d'au moins un polymère réticulable contenant un groupe fonctionnel réactif d'uréthane,
le polymère réticulé contenant une liaison uréthane est disposé partiellement ou totalement sur les surfaces des particules inorganiques de telle sorte que les particules inorganiques sont interconnectées et fixées, et
le polymère réticulé contenant une liaison uréthane présente une température de transition vitreuse (Tg) de -15 à 32 °C, telle que déterminée par calorimétrie différentielle à balayage.

2. Séparateur pour une batterie secondaire selon la revendication 1, dans lequel le polymère réticulé contenant une liaison uréthane présente une température de transition vitreuse (Tg) de -10 à 30 °C, telle que déterminée par calorimétrie différentielle à balayage.

3. Séparateur pour une batterie secondaire selon la revendication 1, qui présente une adhérence à une électrode de 30 gf/25 mm ou plus et un retrait thermique de 35 % ou moins, dans lequel l'adhérence et le retrait thermique sont déterminés selon la description.

4. Séparateur pour une batterie secondaire selon la revendication 1, dans lequel le polymère réticulé contenant une liaison uréthane est obtenu par la réaction de réticulation d'uréthane d'au moins un polymère réticulable contenant un groupe fonctionnel réactif d'uréthane pendant l'étape d'activation de la batterie secondaire.

5. Séparateur pour une batterie secondaire selon la revendication 1, dans lequel le substrat polymère poreux est un substrat polymère poreux à base de polyoléfine.

6. Séparateur pour une batterie secondaire selon la revendication 1, dans lequel les particules inorganiques sont des particules inorganiques présentant une constante diélectrique de 5 ou plus, des particules inorganiques présentant une capacité de transport d'ions lithium, ou un mélange de celles-ci.

7. Batterie secondaire comprenant une cathode, une anode et un séparateur interposé entre la cathode et l'anode, dans lequel le séparateur est le même que celui défini dans l'une quelconque des revendications 1 à 6.

8. Procédé de fabrication d'une batterie secondaire comprenant le séparateur tel que défini dans la revendication 1, le procédé comprenant les étapes consistant à :
préparer une suspension contenant une pluralité de particules inorganiques, un polymère réticulable et un milieu de dispersion ;
appliquer la suspension sur au moins une surface d'un substrat polymère poreux, puis procéder à un séchage, afin de préparer un séparateur préliminaire présentant une couche poreuse de revêtement ;
empiler une électrode, comprenant un collecteur de courant et une couche de matériau actif d'électrode disposée sur au moins une surface du collecteur de courant, sur la surface supérieure de la couche poreuse de revêtement du séparateur préliminaire, tout en amenant la couche de matériau actif d'électrode à faire face à la couche poreuse de revêtement, afin de préparer un composite séparateur préliminaire-électrode ;
préparer une batterie secondaire comprenant le composite séparateur préliminaire-électrode ; et
activer la batterie secondaire,
dans lequel le polymère réticulable de la couche poreuse de revêtement est soumis à une réticulation pendant l'étape d'activation de la batterie secondaire pour obtenir un polymère réticulé contenant une liaison uréthane.

9. Procédé de fabrication d'une batterie secondaire selon la revendication 8, dans lequel le polymère réticulable contient un groupe hydroxyle (-OH), un groupe isocyanate (-NCO) ou les deux.

10. Procédé de fabrication d'une batterie secondaire selon la revendication 8, dans lequel le polymère réticulable comprend un polymère à base de polyvinylidène contenant un groupe hydroxyle (-OH), un groupe isocyanate (-NCO) ou les deux ; un polymère polyacrylique contenant un groupe hydroxyle (-OH), un groupe isocyanate (-NCO) ou les deux ; ou deux d'entre eux ou plus.

11. Procédé de fabrication d'une batterie secondaire selon la revendication 8, dans lequel le polymère réticulable comprend : polyfluorure de vinylidène-chlorotrifluoroéthylène-greffon-(méthacrylate de méthyle-2-acrylate d'isocyanatoéthyle), polyfluorure de vinylidène-chlorotrifluoroéthylène-greffon-(acrylate d'éthyle-4-acrylate d'hydroxybutyle), polyfluorure de vinylidène-greffon-(méthacrylate de méthyle-2-acrylate d'isocyanatoéthyle), polyfluorure de vinylidène-chlorotrifluoroéthylène-greffon-(2-acrylate d'isocyanatoéthyle), polyfluorure de vinylidène-greffon-(acrylate de méthyle-2-acrylate d'isocyanatoéthyle), polyfluorure de vinylidène-chlorotrifluoroéthylène-greffon-(acrylate de méthyle-2-acrylate d'isocyanatoéthyle), ou deux d'entre eux ou plus ; et copolymère d'acrylate d'éthyle-acrylonitrile-acrylamide diméthylique-acide acrylique-4-acrylate d'hydroxybutyle, copolymère d'acrylate d'éthyle-acrylonitrile-2-acrylate d'isocyanatoéthyle, copolymère d'acrylate de méthyle-acrylonitrile-acrylamide diméthylique-acide acrylique-4-acrylate d'hydroxybutyle, copolymère d'acrylate d'éthyle-acrylonitrile-acide acrylique-4-acrylate d'hydroxybutyle, copolymère d'acrylate d'éthyle-acrylonitrile-acrylamide diméthylique-4-acrylate d'hydroxybutyle, copolymère d'acrylate d'éthyle-acrylamide diméthylique-acide acrylique-4-acrylate d'hydroxybutyle, copolymère d'acrylate d'éthyle-acide acrylique-4-acrylate d'hydroxybutyle, copolymère d'acrylate d'éthyle-4-acrylate d'hydroxybutyle, copolymère d'acrylate de méthyle-acrylonitrile-acide acrylique-4-acrylate d'hydroxybutyle, copolymère d'acrylate de méthyle-acrylonitrile-acrylamide diméthylique-4-acrylate d'hydroxybutyle, copolymère d'acrylate de méthyle-acrylamide diméthylique-acide acrylique-4-acrylate d'hydroxybutyle, copolymère d'acrylate de méthyle-acide acrylique-4-acrylate d'hydroxybutyle, copolymère d'acrylate de méthyle-4-acrylate d'hydroxybutyle, ou deux d'entre eux ou plus.

12. Procédé de fabrication d'une batterie secondaire selon la revendication 8, dans lequel le polymère réticulable comprend du polyfluorure de vinylidène-chlorotrifluoroéthylène-greffon-(méthacrylate de méthyle-2-acrylate d'isocyanoéthyle) et un copolymère d'acrylate d'éthyle-acrylonitrile-acrylamide diméthylique-acide acrylique-4-acrylate d'hydroxybutyle, ou un copolymère d'acrylate d'éthyle-acrylonitrile-2-acrylate d'isocyanatoéthyle et du polyfluorure de vinylidène-chlorotrifluoroéthylène-greffon-(acrylate d'éthyle-2-acrylate d'isocyanoéthyle).

13. Procédé de fabrication d'une batterie secondaire selon la revendication 8, dans lequel l'étape d'activation de la batterie secondaire comprend une étape de charge initiale et une étape de vieillissement à haute température.

14. Procédé de fabrication d'une batterie secondaire selon la revendication 13, dans lequel l'étape de vieillissement à haute température est mise en œuvre à une température de 50 °C ou plus.

15. Procédé de fabrication d'une batterie secondaire selon la revendication 13, qui comprend en outre une étape de vieillissement à température ambiante mise en œuvre à une température de 20 à 40 °C entre l'étape de charge initiale et l'étape de vieillissement à haute température.
